# EUROPEAN PATENT APPLICATION

(11) **EP 2 230 467 A1**
(43) Date of publication of application: **22.09.2010**
(21) Application number: 08861222.1
(22) Date of filing: 09.12.2008
(51) Int. Cl.: F24F 6/00, C02F 1/32, C02F 1/48, C02F 1/50, C02F 1/72, F24F 6/06

(54) **HUMIDITY CONTROL DEVICE**

(30) Priority: 18.12.2007 JP 2007325622
(71) Applicant: Daikin Industries, Ltd., Osaka 530-8323 (JP)
(72) Inventor: KAGAWA, Kenkichi, Sakai-shi Osaka 591-8511 (JP); TANAKA, Toshio, Sakai-shi Osaka 591-8511 (JP); OHDOU, Tsunahiro, Sakai-shi Osaka 591-8511 (JP); MOTEGI, Kanji, Sakai-shi Osaka 591-8511 (JP); KAGAWA, Sanae, Kusatsu-shi Shiga 525-8526 (JP)
(74) Representative: HOFFMANN EITLE
(86) International application number: PCT/JP2008/003678
(87) International publication number: WO 2009/078142

(57) **Abstract**

Purifying substances generated in a water purification unit are imparted to water in a water tank. The water containing the purifying substances is supplied to an adsorbing member of a humidification rotor. In the adsorbing member, harmful substances etc. contained in the water are purified by the purifying substances. Consequently, the clean humidification water is imparted from the humidification rotor to air.

## Description

### TECHNICAL FIELD

The present invention relates to a humidity control apparatus for humidifying air by imparting water supplied to water sorbing material, to air.

### BACKGROUND ART

Conventionally, humidity control apparatuses for controlling air humidity in a room etc. have been widely known. Patent Document 1 discloses the humidity control apparatus of this type.

The humidity control apparatus of Patent Document 1 serves as a humidification system for humidifying air. The humidity control apparatus includes a water container in which water is stored; and a discoid humidification rotor arranged so as to cross an air path. The humidification rotor is constituted by water sorbing material, an entire area of which can absorbs moisture, and a lower portion of the humidification rotor is dipped in the water in the water container.

During an operation of the humidity control apparatus, the humidification rotor continuously rotates. In the humidification rotor, a portion containing moisture in the water container is displaced to the air path. Air passes through such a portion to impart the moisture in the humidification rotor to air. The air humidified as described above flows out from the air path to be supplied to a room etc.

### CITATION LIST

### PATENT DOCUMENT

### SUMMARY OF THE INVENTION

### TECHNICAL PROBLEM

As described above, in the humidity control apparatus disclosed in Patent Document 1, room air etc. continuously passes through the water sorbing material of the humidification rotor. At this point, harmful substances or odorous components such as ammonia and formaldehyde may be contained in the air passing through the humidification rotor. Thus, such harmful substances etc. tend to be absorbed/adsorbed by/to the water sorbing material of the humidification rotor. Consequently, the harmful substances are supplied to the room at high concentration, thereby causing a problem in which cleanliness in the room is degraded. In addition, problems are caused, in which odor is generated by multiplication of bacteria etc. in the water sorbing material of the humidification rotor, and the cleanliness in the room is degraded by releasing such bacteria into the room.

The present invention has been made in view of the foregoing, and it is an object of the present invention to provide a humidity control apparatus in which clean humidification water can be imparted from water sorbing material of a humidification unit to air.

### SOLUTION TO THE PROBLEM

A first aspect of the invention is intended for a humidity control apparatus including a humidification unit (43) which has water sorbing material to which water is supplied, and which humidifies air by imparting the water in the water sorbing material to air. In addition, the humidity control apparatus includes a water purification unit (51, 70, 80) configured to generate purifying substances which are imparted to the water to be supplied to the humidification unit (43). The "purifying substances" means substances having an effect for degrading and removing harmful substances or odorous components container in moisture, or a sterilizing effect for killing bacteria etc. existing in moisture.

In the humidity control apparatus of the first aspect of the invention, water (i.e., humidification water) is supplied to the water sorbing material of the humidification unit as necessary. The water supplied to the water sorbing material of the humidification unit (43) is imparted to air, thereby humidifying the air. Meanwhile, during such an operation, the harmful substances etc. is absorbed/adsorbed by/to the water sorbing material of the humidification unit (43), and bacteria is multiplied in the water of the water sorbing material.

In the humidity control apparatus of the present invention, the water purification unit (51, 70, 80) imparts the purifying substances to the water to be supplied to the humidification unit (43). Thus, such purifying substances are also absorbed/adsorbed by/to the water sorbing material of the humidification unit (43). Consequently, in the water sorbing material, the purifying substances degrade and remove the harmful substances etc., and sterilization is performed. Thus, the clean humidification water is imparted from the humidification unit (43) to air.

A second aspect of the invention is intended for the humidity control apparatus of the first aspect of the invention, in which the water purification unit is constituted by an electrical discharge section (51) for generating active species as the purifying substances by generating electrical discharge. The "electrical discharge°' includes, e.g., streamer discharge, creeping discharge, and corona discharge.

The electrical discharge section (51) is provided as the water purification unit in the humidity control apparatus of the second aspect of the invention. In the electrical discharge section (51), predetermined electrical discharge is generated between electrodes, thereby generating the active species (radicals, ozone, high-energy electrons, excited molecules, etc.) as the purifying substances. The active species are imparted to the water to be supplied to the humidification unit (43). Consequently, in the water sorbing material of the humidification unit (43), the active species remove the harmful substances etc. in the water, and, at the same time, the water is sterilized.

A third aspect of the invention is intended for the humidity control apparatus of the first aspect of the invention, in which the water purification unit is constituted by a photocatalyst member (70) for generating active species as the purifying substances.

The photocatalyst member (70) is provided as the water purification unit in the humidity control apparatus of the third aspect of the invention. In the photocatalyst member (70), the active species (OH radicals, H₂O₂, etc.) are generated as the purifying substances under predetermined photoenvironmental conditions. The active species are imparted to the water to be supplied to the humidification unit (43). Consequently, the water of the water sorbing material of the humidification unit (43) is purified.

A fourth aspect of the invention is intended for the humidity control apparatus of the first aspect of the invention, in which the water purification unit is constituted by a metal member (80) for generating metal ions as the purifying substances.

The metal member (80) is provided as the water purification unit in the humidity control apparatus of the fourth aspect of the invention. The metal member (80) reacts with the water to be supplied to the humidification unit (43), thereby depositing the metal ions (e.g., copper ions). Such metal ions are absorbed/adsorbed by/to the water sorbing material of the humidification unit (43), thereby reducing bacterial multiplication in the water sorbing material.

A fifth aspect of the invention is intended for the humidity control apparatus of any one of the first to fourth aspects of the invention, which includes a water container (41) in which water to be supplied to the water sorbing material of the humidification unit (43) is stored, and in which the water purification unit (51, 70, 80) imparts the purifying substances to the water in the water container (41).

The water container (41) for storing the humidification water is provided in the humidity control apparatus of the fifth aspect of the invention. The purifying substances are imparted from the water purification unit (51, 70, 80) to the water in the water tank (41). Thus, in the water container (41), the harmful substances etc. in the water are directly removed and sterilized, thereby improving water purification efficiency.

A sixth aspect of the invention is intended for the humidity control apparatus of any one of the first to third aspects of the invention, which further includes a water container (41) in which water to be supplied to the water sorbing material of the humidification unit (43) is stored, and an injection path (60) in which air flows, and an outflow end of which opens to the water container (41); and in which the water purification unit (51, 70) generates the purifying substances in the injection path (60).

The water container (41) for storing the humidification water and the injection path (60) in which the air flows are provided in the humidity control apparatus of the sixth aspect of the invention. After the water purification unit (51, 70) imparts the purifying substances (active species etc.) to the injection path (60), the purifying substances flow out from the injection path (60) together with the air, and then are supplied to the water container (41). In the water container (41), the purifying substances supplied in such a manner purify the water.

A seventh aspect of the invention is intended for the humidity control apparatus of the fifth aspect of the invention, in which the water purification unit (51, 70, 80) is arranged in the water container (41).

In the seventh aspect of the invention, the water purification unit (51, 70, 80) is arranged in the water container (41), and generates the purifying substances. Consequently, the water in the water container (41) efficiently reacts with the purifying substances, thereby improving the water purification efficiency.

A eighth aspect of the invention is intended for the humidity control apparatus of any one of the first to seventh aspects of the invention, which further includes an air purification unit (20) configured to purify air.

The air purification unit (20) for purifying air is provided in the humidity control apparatus of the eight aspect of the invention. That is, the humidity control apparatus of the present invention has both of humidification and air purification functions. As described above, if the humidity control apparatus is used for the air purification, air to be treated contains many harmful substances or odorous components. Thus, the harmful substances tend to be absorbed/adsorbed by/to the water sorbing material of the humidification unit (43), and the multiplication of bacteria etc. is promoted. However, in the present invention, since the purifying substances remove or sterilize the harmful substances etc. in the water sorbing material of the humidification unit (43), the clean humidification water can be supplied to a room etc.

### ADVANTAGES OF THE INVENTION

According to the present invention, the purifying substances generated in the water purification unit (51, 70, 80) are imparted to the water to be supplied to the water sorbing material of the humidification unit (43), thereby removing the harmful substances etc. in the water, which are absorbed/adsorbed by/to the water sorbing material, and sterilizing the water. Thus, the clean humidification water can be imparted from the humidification unit (43) to air, and good comfort in the room can be maintained.

In addition, if, e.g., tap water is supplied to the humidification unit (43), the tap water may contain an organochlorinated compound such as trihalomethane. According to the present invention, such harmful substances in the tap water can be removed by the purifying substances, thereby supplying cleaner humidification water to the room etc.

In particular, in the second or third aspect of the invention, the active species generated in the water purification unit (51, 70, 80) are used, thereby effectively removing the harmful substances etc. in the water sorbing material of the humidification unit (43), and performing the sterilization. In addition, in the fourth aspect of the invention, the metal ions deposited from the metal member (80) can effectively reduce the bacterial multiplication in the water sorbing material of the humidification unit (43). Further, in the fifth aspect of the invention, the purifying substances are imparted to the water in the water container (41), thereby removing the harmful substances etc. in the water container (41), and effectively reducing the bacterial multiplication in the water container (41).

Further, in the sixth aspect of the invention, the purifying substances generated in the water purification unit (51, 70) are sent to the water container (41) together with air through the injection path (60). Thus, according to the present invention, many purifying substances can be supplied to the water in the water container (41), and the water in the water container (41) can be efficiently purified by the purifying substances. In addition, the water purification unit (51, 70) can be arranged outside the water container (41), thereby sufficiently ensuring an installation space of the water purification unit (51, 70).

In addition, according to the seventh aspect of the invention, the water purification unit (51, 70, 80) is arranged in the water container (41), thereby ensuring delivery of the purifying substances generated from the water purification unit (51, 70, 80) to the water in the water container (41). Thus, stable water purification can be ensured in the water container (41). Further, according to the eight aspect of the invention, the humidity control apparatus can be provided, in which, in addition to the air humidification, air can be purified.

### BRIEF DESCRIPTION OF THE DRAWING

[FIG. 1] FIG. 1 is a perspective view illustrating an entire structure of a humidity control apparatus of an embodiment, and illustrating a state in which a water tank is drawn out from a casing.
[FIG. 2] FIG. 2 is a longitudinal sectional view schematically illustrating inside of the humidity control apparatus.
[FIG. 3] FIG. 3 is a perspective view of a humidification unit.
[FIG. 4] FIG. 4 is a view schematically illustrating a structure of a water purification unit.
[FIG. 5] FIG. 5 is a view schematically illustrating a structure of a water purification unit of a second variation.
[FIG. 6] FIG. 6 is a view schematically illustrating a structure of a water purification unit of a third variation.

### DESCRIPTION OF REFERENCE CHARACTERS

- 20: Air Purification Unit
- 41: Water Tank (Water Container)
- 43: Humidification Rotor (Humidification Unit)
- 51: Water Purification Electrical Discharge Section (Electrical Discharge Section, Water Purification Unit)
- 60: Piping Unit (Injection Path)
- 70: Photocatalyst Member (Water Purification Unit)
- 80: Metal Member (Water Purification Unit)

### DESCRIPTION OF EMBODIMENTS

Embodiments of the present invention will be described in detail hereinafter with reference to the drawings.

A humidity control apparatus (10) of the present embodiment can perform an operation in which room air is humidified while purifying the room air.

### <Entire Structure of Humidity Control Apparatus>

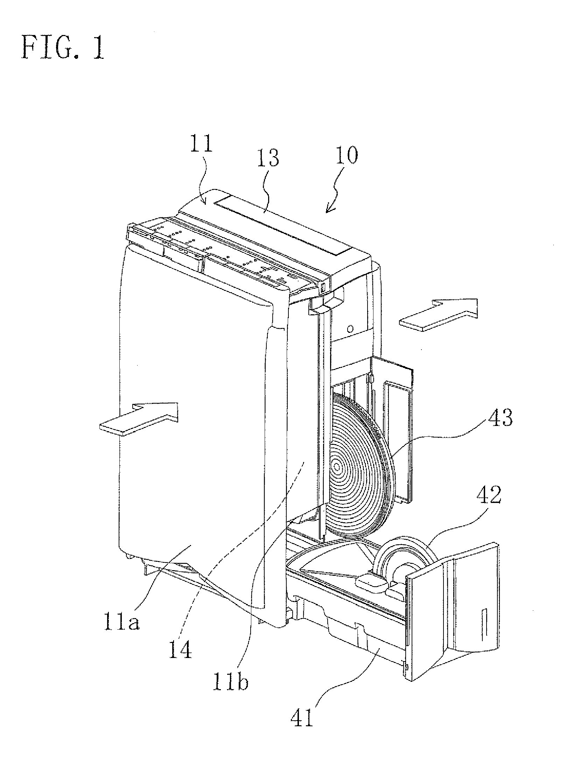

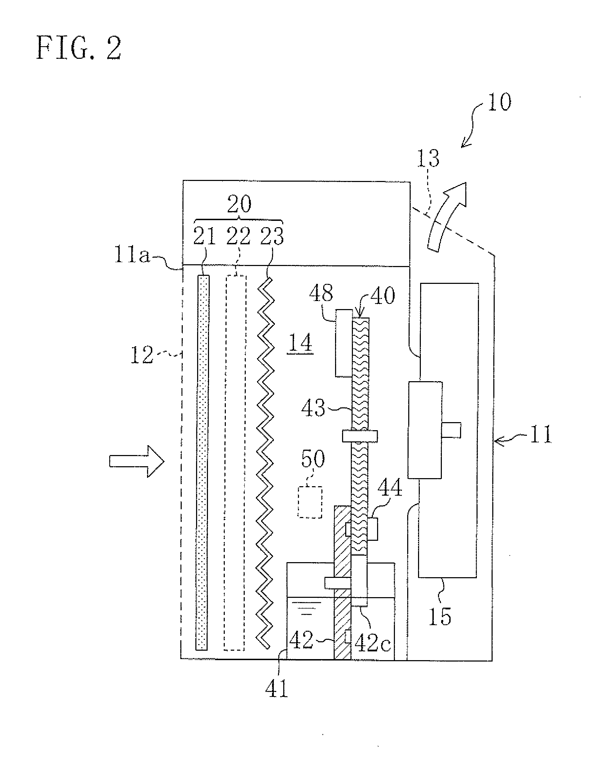

As illustrated in FIGS. 1 and 2, the humidity control apparatus (10) includes a casing (11). The casing (11) is formed in a rectangular shape defining flat surfaces on front and rear sides. A front panel (11a) is formed on the front side (left side as viewed in FIG. 1) of the casing (11). Suction ports (12) for injecting air into the casing (11) are formed in the front panel (11a) (see FIG. 2). The suction port (12) is formed on, e.g., each of right and left sides of the front panel (11a). In addition, in the casing (11), a blow-off port (13) for blowing off air from the casing (11) is formed in an upper portion on the rear side. An air path (14) through which air flows from the suction ports (12) to the blow-off port (13) is formed in the casing (11).

As illustrated in FIG. 2, a prefileter (21), an ionization section (22), a pleated filter (23), a humidification unit (40), and a centrifugal fan (15) are provided in the air path (14) in this order from an air-flow upstream side toward an air-flow downstream side.

### <Structure of Air Purification Unit>

As illustrated in FIG. 2, as an air purification unit (20) configured to purify air, the humidity control apparatus (10) includes the prefileter (21), the ionization section (22), and the pleated filter (23), which have been described above.

The prefileter (21) serves as a duct collection filter for physically trapping relatively-large dust contained in air.

The ionization section (22) serves as a dust charging unit configured to charge dust in air. The ionization section (22) is provided with, e.g., a linear electrode, and a plate-like electrode facing the linear electrode. In the ionization section (22), voltage is applied from a power source (not shown in the figure) to the electrodes, thereby generating corona discharge between the electrodes. Such corona discharge charges dust in air to a predetermined voltage (positive or negative charge).

The pleated filter (23) serves as a corrugated plate-like electrostatic filter. That is, in the pleated filter (23), the dust charged in the ionization section (22) is electrically attracted and trapped. Deodorizing material such as a photocatalyst may be deposited on the pleated filter (23).

### <Structure of Humidification Unit>

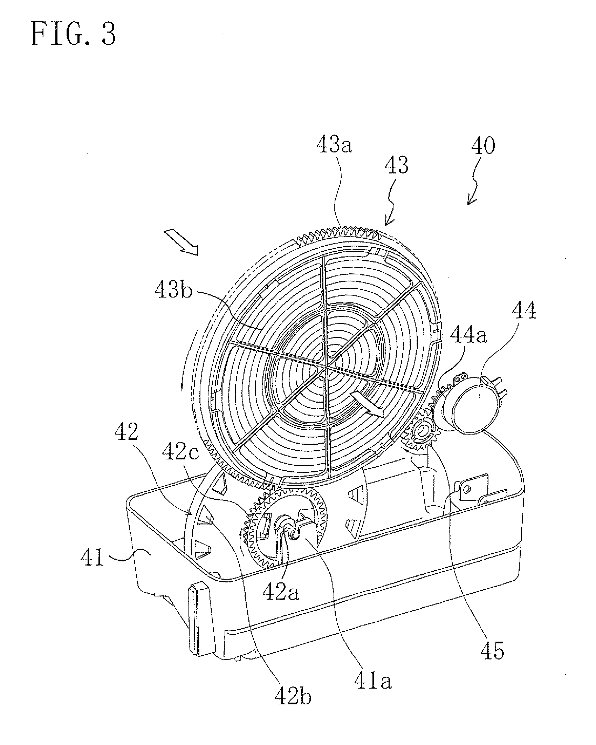

As illustrated in FIG. 3, the humidification unit (40) includes a water tank (41) for storing water; a water turbine (42) for drawing up the water in the water tank (41); a humidification rotor (43) serving as a humidification unit configured to impart the water drawn up by the water turbine (42) to air; and a drive motor (44) for rotatably driving the humidification rotor (43). In addition, the humidification unit (40) includes a heater (48) for heating the humidification rotor (43) (see FIG. 2).

The water tank (41) serves as a horizontally-elongated water container with an opening on an upper side. The water tank (41) is installed in a lower space of the casing (11), and can be drawn out through a draw-out opening (11b) of the casing (11) (see FIG. 1). This allows a user etc. to refill the water tank (41) with humidification water (e.g., tap water) as necessary. In addition, shaft bearings (41 a) for rotatably holding the water turbine (42) are vertically arranged on a bottom surface of the water tank (41).

The water turbine (42) is formed in an approximately discoid shape defining flat surfaces on the front and rear sides, and a rotating shaft (42a) is provided so as to protrude from the center of the water turbine (42). The rotating shaft (42a) is pivotally supported by upper ends of the shaft bearings (41 a). The water turbine (42) is rotatably provided so that a part (a predetermined portion including a lower end portion) of the water turbine (42) is dipped in the humidification water of the water tank (41).

A plurality of concave portions (42b) are formed around the shaft in a rear-side surface (side surface facing the humidification rotor (43)) of the water turbine (42). The plurality of concave portions (42b) include approximately trapezoid openings which have the width increasing toward an outer side of the water turbine (42) in the radial direction. The width of the opening of the concave portion (42b) in the circumferential direction is narrower than the width of an internal space of the concave portion (42b) in the circumferential direction. Further, walls of the concave portion (42b) on an inner side in the radial direction gradually incline so as to become closer to the shaft center toward an opening end. In an outer end portion of the water turbine (42) in the radial direction, the concave portions (42b) are arranged at regular intervals in the circumferential direction. During rotating the water turbine (42), the water turbine (42) is alternately displaced between a position where the concave portions (42b) are dipped in the water of the water tank (41) and a position where the concave portions (42b) are taken out of the water.

In the rear-side surface of the water turbine (42), a toothed wheel (42c) is integrally formed in a portion closer to the shaft center of the water turbine (42). The toothed wheel (42c) engages with a driven toothed wheel (43a) of the humidification rotor (43) which will be described later.

The humidification rotor (43) includes the circular driven toothed wheel (43a); and a discoid adsorbing member (43b) fitted in and held by the driven toothed wheel (43a). The adsorbing member (43b) serves as water sorbing material by/to which moisture is absorbed/adsorbed. More specifically, the adsorbing member (43b) is constituted by honeycomb base material with adsorbent which is deposited on a surface thereof. Material having good adsorption performance to moisture, such as granular zeolite, is used as the adsorbent. In addition, as binder for depositing the adsorbent on the base material, thermoplastic resin such as modified polyphenylene ether, polystyrene, and ABS resin (acrylonitrile-butadiene-styrene copolymer resin) can be used.

The humidification rotor (43) is rotatably held with the rotating shaft at a position higher than a water level of a full capacity of the water tank (41). In addition, the humidification rotor (43) is arranged so that a predetermined portion including a lower end of the humidification rotor (43) substantially contacts the water turbine (42). That is, the humidification rotor (43) has a portion overlapping with the concave portions (42b) of the water turbine (42) in the axial direction. This allows the adsorbing member (43b) of the humidification rotor (43) to absorb/adsorb the humidification water drawn up by the concave portions (42b) of the water turbine (42).

The drive motor (44) includes a driving toothed wheel (44a). The driving toothed wheel (44a) engages with the driven toothed wheel (43a) of the humidification rotor (43) through a pinion (45). That is, when rotatably driving the driving toothed wheel (44a) by the drive motor (44), the pinion (45) and the driven toothed wheel (43a) rotate, resulting in rotating the water turbine (42) engaging with the driven toothed wheel (43a).

The heater (48) illustrated in FIG. 2 is arranged closer to an upper end portion of an upstream-side surface of the humidification rotor (43). The heater (48) can heat air flowing into the humidification rotor (43).

### <Structure of Water Purification Unit>

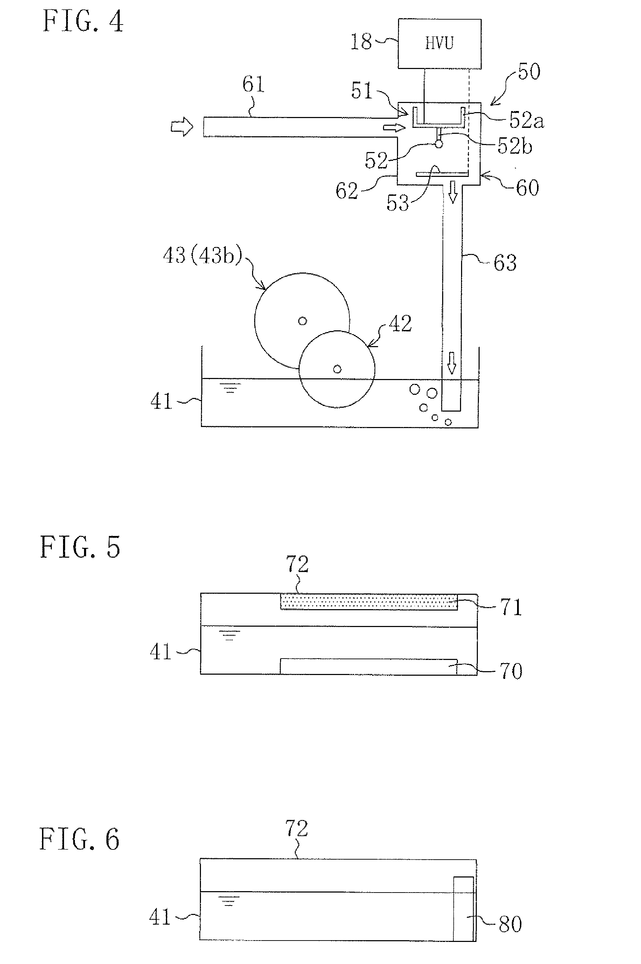

The humidity control apparatus (10) further includes a water purification unit (50) for purifying water to be supplied from the water tank (41) to the humidification rotor (43). As illustrated in FIG. 4, the water purification unit (50) includes a water purification electrical discharge section (51) as a water purification unit; and a piping unit (60) defining an injection path.

The piping unit (60) is configured by connecting an inflow pipe (61), an electrical discharge unit housing (62), and an outflow pipe (63) in this order. An inflow end of the inflow pipe (61) opens to the air path (14), and an outflow end thereof communicates with the electrical discharge unit housing (62). The inflow pipe (61) is horizontally held. An inflow end of the outflow pipe (63) communicates with the electrical discharge unit housing (62), and an outflow end thereof opens to the water tank (41). The outflow pipe (63) is vertically held so that the outflow end thereof is positioned lower than the water level in the water tank (41). In the piping unit (60), the injection path is formed by connecting internal spaces of the inflow pipe (61), of the electrical discharge unit housing (62), and of the outflow pipe (63) in this order. The piping unit (60) is configured so that a part of air flowing in the air path (14) flows and is injected into the piping unit (60).

The water purification electrical discharge section (51) is arranged in the electrical discharge unit housing (62). The water purification electrical discharge section (51) serves as an electrical discharge section for generating active species in the piping unit (60) by electrical discharge. The water purification electrical discharge section (51) includes a rod-like electrode (52) and a flat plate-like electrode (53). The rod-like electrode (52) is supported by a base plate (52a) through a support plate (52b). The rod-like electrode (52) is formed in an elongated linear shape, and has an approximately-circular cross section. The flat plate-like electrode (53) is formed in a flat plate-like shape extending in the same direction as the rod-like electrode (52). The rod-like electrode (52) and the flat plate-like electrode (53) are arranged so as to be parallel to each other, and tip ends of the rod-like electrode (52) face the flat plate-like electrode (53).

The rod-like electrode (52) is connected to a positive-going side of a power source (18), and the flat plate-like electrode (53) is connected to a negative-going side (or ground) of the power source (18). When applying a potential difference from the power source (18) to the electrodes (52, 53), streamer discharge is generated from the tip ends of the rod-like electrode (52) toward the flat plate-like electrode (53). Consequently, in the water purification electrical discharge section (51), active species (radicals, ozone, high-energy electrons, excited molecules, etc.) are generated by the streamer discharge, and then such active species are imparted to air. DC high voltage is preferably applied from the power source (18) to the water purification electrical discharge section (51), and more preferably discharge current of the water purification electrical discharge section (51) is maintained constant, i.e., a constant current control is performed.

### Operations

In the humidity control apparatus (10) of the present embodiment, a humidification operation is performed, in which room air is humidified while purifying the room air.

In the humidification operation, the centrifugal fan (15) is operated to inject room air into the air path (14) through the suction ports (12). In addition, the humidification rotor (43) is rotatably driven while applying current to the heater (48). Further, voltage is applied to the electrodes of the ionization section (22).

As illustrated in FIG. 2, the air flowing into the air path (14) passes through the prefileter (21), and dust in such air is trapped by the prefileter (21). Subsequently, such air passes through the ionization section (22). In the ionization section (22), corona discharge is generated between the electrodes, and dust in the air is charged. The air flowing out from the ionization section (22) passes through the pleated filter (23). In the pleated filter (23), the charged dust is electrically attracted and trapped. The air flowing out from the pleated filter (23) is heated by the heater (48), and then passes through the humidification rotor (43).

At this point, in the humidification unit (40), the water turbine (42) rotates to supply the humidification water in the water tank (41) to the adsorbing member (43b) of the humidification rotor (43) as necessary. Specifically, in the water turbine (42), the concave portions (42b) are dipped in the humidification water stored in the water tank (41). This allows the humidification water to enter the concave portion (42b), and to be retained therein. The concave portion (42b) in which the humidification water is retained is taken out of the humidification water to be upwardly displaced. As the concave portion (42b) moves toward the humidification rotor (43), the humidification water retained in the concave portion (42b) gradually flows out from the concave portion (42b) by its own weight. Then, when the concave portion (42b) is displaced to the uppermost end position, approximately all of the humidification water in the concave portion (42b) flows out.

The humidification water flowing out from the concave portion (42b) contacts the humidification rotor (43) adjacent to the concave portion (42b) to be absorbed/adsorbed by/to the adsorbing member (43b). Such an action continuously supplies the humidification water to the humidification rotor (43) in the humidification unit (40).

In the humidification rotor (43), air passes through the adsorbing member (43b) to which moisture is supplied. Consequently, the moisture absorbed/adsorbed by/to the adsorbing member (43b) is released to air, thereby humidifying the air. The air cleaned and humidified as described above is supplied to a room through the blow-off port (13). In the humidification operation, a voltage supply from the power source (18) to the ionization section (22) is stopped, thereby allowing an operation in which air is not actively purified.

### <Water Purification Action>

If the humidification operation is continuously performed, harmful substances or odorous components (e.g., ammonia, formaldehyde, and smell of cigarette) contained in air to be treated may be absorbed/adsorbed by/to the adsorbing member (43b) of the humidification rotor (43), and then may be concentrated. Immediately after current is applied to, e.g., the heater (48) in order to start the humidification operation, there is a possibility that such concentrated harmful substances etc. are released to air. In such a case, the high-density harmful substances etc. are supplied to the room, thereby degrading cleanliness in the room. In addition, during the humidification operation, bacteria etc. contained in the air to be treated are also trapped by the adsorbing member (43b). Thus, there are possibilities that odor is generated by multiplication of bacteria etc. on, e.g., a surface of the adsorbing member (43b), and the cleanliness in the room is degraded by releasing such bacteria to air. The humidity control apparatus (10) of the present embodiment allows a water purification action in which water to be supplied to the humidification rotor (43) is purified by the water purification unit (50).

Specifically, the water purification action is performed at the same time as, e.g., the humidification operation. In the water purification action, air is injected into the piping unit (60) (see FIG. 4). Voltage is applied from the power source (18) to the water purification electrical discharge section (51). Consequently, in the water purification electrical discharge section (51), streamer discharge is generated, thereby generating active species in the electrical discharge unit housing (62). The active species flows into the outflow pipe (63) together with air flowing in the electrical discharge unit housing (62). The air flows from the outflow pipe (63) into water in the water tank (41). Consequently, the air containing the active species is supplied to the water in the water tank (41) as air bubbles. This brings a state in which the water in the water tank (41) contains the active species.

The water containing the active species is supplied to the humidification rotor (43) through the water turbine (42) as described above. The active species are sent to the adsorbing member (43b) of the humidification rotor (43) together with moisture. The harmful substances absorbed/adsorbed by/to the adsorbing member (43b) are degraded and removed by the active species. At the same time, the surface of the adsorbing member (43b) is sterilized. In this manner, during the humidification operation, the water absorbed/adsorbed by/to the adsorbing member (43b) is purified as necessary. Thus, the clean humidification water is imparted from the humidification rotor (43) to air, thereby not degrading the cleanliness in the room during the humidification operation.

### Advantages of Embodiment

In the foregoing embodiment, the active species generated in the water purification electrical discharge section (51) are imparted to the water in the water tank (41), and then such water is supplied to the humidification rotor (43). Thus, the harmful substances etc. absorbed/adsorbed by/to the adsorbing member (43b) of the humidification rotor (43) can be degraded and removed by the active species, and the surface of the adsorbing member (43b) can be sterilized. Consequently, during the humidification operation, the clean humidification water can be imparted to air, thereby maintaining the cleanliness in the room. In addition, in the water purification electrical discharge section (51), the streamer discharge is generated, in which power consumption is relatively small, and the high-density active species can be generated. Thus, energy saving in the humidity control apparatus (10) can be ensured while purifying the water to be collected in the water tank (41) with high efficiency. Further, tap water is supplied to the water tank (41) by a user etc. as necessary, and the active species can degrade and remove an organochlorinated compound such as trihalomethane contained in the tap water.

### Variations of Embodiment

In the foregoing embodiment, the following structures of variations can be employed as the water purification unit configured to purify the water to be collected in the water tank (41).

### <First Variation>

In the water purification electrical discharge section (51) illustrated in FIG. 4, the streamer discharge is generated, thereby imparting the active species to air. However, in the water purification electrical discharge section (51), active species may be generated as purifying substances by other electrical discharge such as creeping discharge and corona discharge. In addition, the water purification electrical discharge section (51) may be provided in the water tank (41) to generate the active species in the water tank (41) by the electrical discharge.

### <Second Variation>

As illustrated in FIG. 5, a photocatalyst member (70) may be used as the water purification unit. The photocatalyst member (70) is constituted by base material with a photocatalyst such as titanium dioxide being deposited on a surface thereof. The photocatalyst member (70) is arranged in the water tank (41), and is dipped in water. In the second variation, an ultraviolet lamp (71) is provided so as to face the photocatalyst member (70). The ultraviolet lamp (71) irradiates the photocatalyst member (70) with ultraviolet rays, and is held in, e.g., a lower surface of a cover (72) of the water tank (41).

In the second variation, under the ultraviolet irradiation environment by the ultraviolet lamp (71), active species (purifying substances) such as OH radicals and H₂O₂ are generated from the photocatalyst member (70). Such active species are supplied to the humidification rotor (43), thereby degrading and removing harmful substances etc. in water retained in the humidification rotor (43), and sterilizing the water. In addition, the photocatalyst member (70) may be arranged in the piping unit (60) of the foregoing embodiment.

### <Third Variation>

As illustrated in FIG. 6, a metal member (80) generating predetermined metal ions (purifying substances) may be used as the water purification unit. In such an example, the metal member (80) is made of a cooper-ion compound. The metal member (80) is arranged in the water tank (41), and is dipped in water.

In the third variation, cooper ions are deposited from the metal member (80) to the water in the water tank (41). Such cooper ions are supplied to the humidification rotor (43) to reduce/block bacterial multiplication in the water retained in the humidification rotor (43), thereby purifying the water. A metal compound etc. generating other ions (e.g., silver ions) may be used as the metal member (80). Further, instead of using the metal member (80), other functional material for preventing the bacterial multiplication may be used. Such functional material includes, e.g., material generating plant-derived essential oil (purifying substance) such as catechin, and more specifically includes material made by injecting such plant-derived essential oil into a soluble microcapsule.

The inventions of the foregoing embodiment and of the variations may be combined as necessary. In addition, the foregoing embodiments have been set forth merely for purposes of preferred examples in nature, and are not intended to limit the scope, applications, and use of the invention.

### INDUSTRIAL APPLICABILITY

As described above, the present invention is useful for the humidity control apparatus for humidifying air by imparting water supplied to the water sorbing material, to air.

## Claims

1. A humidity control apparatus including a humidification unit which has water sorbing material to which water is supplied, and which humidifies air by imparting the water in the water sorbing material to air, comprising:
a water purification unit configured to generate purifying substances which are imparted to the water to be supplied to the humidification unit.

2. The humidity control apparatus of claim 1, wherein
the water purification unit is constituted by an electrical discharge section for generating active species as the purifying substances by generating electrical discharge.

3. The humidity control apparatus of claim 1, wherein
the water purification unit is constituted by a photocatalyst member for generating active species as the purifying substances.

4. The humidity control apparatus of claim 1, wherein
the water purification unit is constituted by a metal member for generating metal ions as the purifying substances.

5. The humidity control apparatus of any one of claims 1-4, comprising:
a water container in which water to be supplied to the water sorbing material of the humidification unit is stored,
wherein the water purification unit imparts the purifying substances to the water in the water container.

6. The humidity control apparatus of any one of claims 1-3, further comprising:
a water container in which water to be supplied to the water sorbing material of the humidification unit is stored; and
an injection path in which air flows, and an outflow end of which opens to the water container,
wherein the water purification unit generates the purifying substances in the inj ection path.

7. The humidity control apparatus of claim 5, wherein
the water purification unit is arranged in the water container.

8. The humidity control apparatus of any one of claims 1-7, further comprising:
an air purification unit configured to purify air.
